# EUROPEAN PATENT APPLICATION

(11) **EP 1 338 905 A1**
(43) Date of publication of application: **27.08.2003**
(21) Application number: 02290418.9
(22) Date of filing: 21.02.2002
(51) Int. Cl.: G02B 6/30, G02B 6/12

(54) **Optical waveguide end facet coupling**

(71) Applicant: CORNING INCORPORATED, Corning, N.Y. 14831 (US)
(72) Inventor: Moroni, Marc, 77000 Melun (FR); Baney, Bruno Paul Marc, 77210 Avon (FR)
(74) Representative: Poole, Michael John

(57) **Abstract**

An optical device for use with an optical signal propagating therein comprising a first waveguide having a core which is terminated at an endface, in which either (a) the endface of the waveguide is uncontrolled (for instance not being smooth, not being optically flat, and/or not being at an angle optimised to avoid deleterious back-reflection) or (b) the first waveguide is a polymer waveguide or (c) both. A second waveguide is terminated at an endface within about 50µm of the endface of the first waveguide so that the waveguides are optically coupled. A material is situated in the gap between the first waveguide and the second waveguide and has a refractive index within about 0.03 of the refractive index of the core of the first waveguide. When the first waveguide is a polymer waveguide, its core preferably has an effective refractive index either less than about 1.4 or greater than about 1.57 (at 1550nm).

## Description

### BACKGROUND OF THE INVENTION

### 1. Field of the Invention

The present invention relates generally to optical communications devices, and more specifically to the endface coupling of waveguide devices.

### 2. Technical Background

In optical communication systems, messages are transmitted by electromagnetic carrier waves at optical frequencies that are generated by such sources as lasers and light-emitting diodes. There is interest in such optical communication systems because they offer several advantages over conventional communication systems.

One preferred device for routing or guiding waves of optical frequencies from one point to another is an optical waveguide. The operation of an optical waveguide is based on the fact that when a light-transmissive medium is surrounded or otherwise bounded by an outer medium having a lower refractive index, light introduced along the axis of the inner medium substantially parallel to the boundary with the outer medium is highly reflected at the boundary, trapping the light in the inner medium and thus producing a guiding effect. A wide variety of optical devices can be made which incorporate such light guiding structures as the light transmissive elements. Illustrative of such devices are planar optical slab waveguides, channel optical waveguides, rib waveguides, optical couplers, optical splitters, optical switches, optical filters, arrayed waveguide gratings, waveguide Bragg gratings, variable attenuators and the like. For light of a particular frequency, optical waveguides may support a single optical mode or multiple modes, depending on the dimensions of the inner light guiding region and the difference in refractive index between the inner medium and the surrounding outer medium.

Optical waveguide devices and other optical interconnect devices may be constructed from organic polymeric materials. Whereas single mode optical devices built from planar waveguides made from glass are relatively unaffected by temperature, devices made from organic polymers may show a significant variation of properties with temperature. This is due to the fact that organic polymeric materials have a relatively high thermo-optic coefficient (dn/dT). Thus, as an organic polymer undergoes a change in temperature, its refractive index changes appreciably. This property can be exploited to make active, thermally tunable or controllable devices incorporating light transmissive elements made from organic polymers. One example of a thermally tunable device is a 1x2 switching element activated by the thermo-optic effect. Thus, light from an input waveguide may be switched between two output waveguides by the application of a thermal gradient induced by a resistive heater. Typically, the heating/cooling processes occur over the span of one to several milliseconds.

In order to use planar waveguide devices in optical communications systems, it is usually necessary to couple another waveguide (e.g. an optical fiber) to the planar waveguide. The process of coupling the endfaces of two waveguides, such as an optical fiber and a planar waveguide, is known herein as pigtailing. Pigtailing allows for the efficient, stable transfer of an optical signal from one waveguide to another. In conventional pigtailing processes, the endfaces of both the planar waveguide and an optical fiber are formed at angles from the normal to the propagation axis. The endfaces of the waveguide and of the fiber are optically coupled with a small gap, typically about 10-30 µm, remaining between the two. An adhesive is used to fill the gap and to hold the optical fiber into place against the planar waveguide. It is desirable to provide a stable and reliable joint with as low additional loss as possible as well as low back-reflectance (and therefore a low return loss) in the device. The adhesive conventionally has an index of between 1.45 and about 1.52 at 1550 nm, while the optical fiber and typically has an index of about 1.46 at 1550 nm. The use of angled endfaces (typically about 8° from normal) ensures that any light reflected due to index differences at the waveguide/adhesive and fiber/adhesive interfaces is not coupled into waveguide or fiber propagation modes, thus minimizing return loss.

### SUMMARY OF THE INVENTION

A principle aspect of the invention relates to an optical device for use with an optical signal propagating therein comprising a first waveguide having a core which is terminated at an endface, in which either (a) the endface of the waveguide is uncontrolled (as hereafter explained, for instance not being smooth, not being optically flat, and/or not being at an angle optimised to avoid deleterious back-reflection) or (b) the said first waveguide a polymer waveguide or (c) both. A second waveguide is terminated at an endface within about 50 µm of the endface of the first waveguide so that the waveguides are optically coupled. A pigtailing material is situated in the gap between the first waveguide and the second waveguide and has a refractive index within about 0.03 of the refractive index of the core of the first waveguide.

One major aspect of the present invention relates to an optical device for use with an optical signal propagating therein. The optical device includes a polymer waveguide having a core and an endface, the core having a refractive index, the core being terminated at the endface. The optical device also includes an inorganic waveguide having a core and an endface, the core of the inorganic waveguide having a refractive index, the core of the inorganic waveguide being terminated at the endface, the endface of the polymer waveguide being within about 50 µm of the endface of the inorganic waveguide, the core of the polymer waveguide being substantially optically coupled to the core of the inorganic waveguide. A pigtailing material having a refractive index within about 0.03 of the refractive index of the core of polymer waveguide is situated in the gap between the polymer waveguide and the inorganic waveguide. The refractive index of the core of the polymer waveguide is less than about 1.4, or greater than about 1.57 at 1550 nm.

Another aspect of the present invention relates to an optical device for use with an optical signal propagating therein. The optical device includes a polymer waveguide having a core and an endface, the core having a refractive index, the core being terminated at the endface. The optical device also includes an inorganic waveguide having a core and an endface, the core of the inorganic waveguide having a refractive index, the core of the inorganic waveguide being terminated at the endface, the endface of the polymer waveguide being within about 50 µm of the endface of the inorganic waveguide, the core of the polymer waveguide being substantially optically coupled to the core of the inorganic waveguide. A pigtailing material having a refractive index within about 0.03 of the refractive index of the core of polymer waveguide is situated in the gap between the polymer waveguide and the inorganic waveguide. The refractive index of the core of the polymer waveguide is less than about 1.4 at 1550 nm.

Another aspect of the present invention relates to a method for constructing an optical device. A polymer waveguide having a core and an endface is provided, the core of the polymer waveguide having a refractive index, the core being terminated at the endface, the core having a refractive index of less than about 1.40 or greater than about 1.57 at 1550 nm. An inorganic waveguide having a core and an endface is also provided, the core of the inorganic waveguide having a refractive index. The endface of the polymer waveguide is aligned with the endface of the inorganic waveguide with a gap of less than 50 µm therebetween, the core of the polymer waveguide being substantially optically coupled to the core of the inorganic waveguide. The gap is filled with an energy curable composition. The energy curable composition is cured to yield a pigtailing material with a refractive index within about 0.03 of the refractive index of the core of the polymer waveguide.

Another aspect of the present invention relates to an optical device for use with an optical signal propagating therein. The optical device includes a first waveguide having a core and an endface, the core of the first waveguide having a refractive index, the core being terminated at the endface, the endface of the waveguide being uncontrolled. The optical device further includes a second waveguide having a core and an endface, the core of the second waveguide having a refractive index, the core of the second waveguide being terminated at the endface, the endface of the first waveguide being within about 50 µm of the endface of the second waveguide, the core of the first waveguide being substantially optically coupled to the core of the second waveguide. A pigtailing material having a refractive index within about 0.03 of the refractive index of the core of the first waveguide is situated in the gap between the first waveguide and the second waveguide.

The devices, methods and compositions of the present invention result in a number of advantages over prior art devices, methods and compositions. For example, the devices of the present invention can exhibit a very low return loss. Further, it is possible to ensure consistent return losses from device to device and between different waveguides on a common device. The adhesive compositions used in the present invention can be formulated to be especially compatible with the polymer waveguide material, thus improving adhesion. In the devices and methods of the present invention, less control of endface geometry and quality is required, simplifying manufacturing processes. Compared to prior methods, the present invention provides devices with improved return loss when using brittle, crystalline, or soft waveguide materials.

Additional features and advantages of the invention will be set forth in the detailed description which follows, and in part will be readily apparent to those skilled in the art from the description or recognized by practicing the invention as described in the written description and claims hereof, as well as the appended drawings.

It is to be understood that both the foregoing general description and the following detailed description are merely exemplary of the invention, and are intended to provide an overview or framework to understanding the nature and character of the invention as it is claimed.

The accompanying drawings are included to provide a further understanding of the invention, and are incorporated in and constitute a part of this specification. The drawings illustrate one or more embodiment(s) of the invention, and together with the description serve to explain the principles and operation of the invention.

### BRIEF DESCRIPTION OF THE DRAWINGS

FIG. 1 is schematic side view of a pigtailed polymer waveguide device according to an embodiment of the present invention;
FIG. 2 is a schematic side view of a pigtailed polymer waveguide device using an adhesive for mechanical stability according to an embodiment of the present invention;
FIG. 3 is a schematic side view of an uncontrolled endface formed at an angle different than the angle of a substrate; and
FIG. 4 is a schematic side view of a pigtailed waveguide device having an uncontrolled endface according to an embodiment of the present invention

### DETAILED DESCRIPTION OF THE PREFERRED EMBODIMENTS

In one aspect of the present invention, pigtailed polymer waveguide devices and methods for making pigtailed polymer waveguide devices are provided. Polymer waveguides are conventionally made from a wide variety of materials. Since high concentrations of C-H bonds tend to increase optical loss at telecommunications wavelengths, it is desirable to construct waveguides from polymers without a significant concentration of C-H bonds. For example, highly fluorinated polymers may be used in polymer waveguides. Fluorination tends to decrease the refractive index of the polymer, resulting in a waveguide with a much lower refractive index than that of standard optical fiber and optical adhesives. Alternatively, highly chlorinated polymers, polymers with a high concentration of aromatic rings, and polymers with a high concentration of sulfur atoms may be used in polymer waveguides. Chlorination, aromaticity and sulfur tend to increase the refractive index of the polymer, resulting in a waveguide with a much higher effective refractive index than that of standard optical fiber and optical adhesives.

Use of conventional pigtailing adhesives and methods in the pigtailing of planar polymer waveguides has been found by the present inventors to yield a high variability of return loss from device to device and between different waveguides on a common device. The present invention provides pigtailed polymer waveguides with a low and consistent return loss, as well as a method for making pigtailed polymer waveguides and adhesive compositions for use in making pigtailed polymer waveguides. Optical devices of the present invention may have return losses of more negative than -40 dB, or even more negative than -50 dB.

The present inventors have discovered that the index difference between conventional optical adhesives and polymeric waveguide materials can be problematic in the pigtailing of optical devices. Conventional pigtailing materials have refractive indices of between about 1.45 and 1.52 at the 1550 nm wavelength range commonly used in telecommunications. As described above, polymer waveguide materials may have either very low refractive indices or very high refractive indices. Low index polymer waveguides may have refractive indices of less than about 1.40, or even less than about 1.35 at 1550 nm. High index polymer waveguides may have refractive indices of greater than about 1.57, or even greater than about 1.62 at 1550 nm. The present inventors have determined that, in order to fabricate pigtailed devices with low and consistent return losses, it is desirable to match the refractive index of the polymer waveguide to the refractive index of the pigtailing material. As used herein, a pigtailing material is a polymeric material that fills the gap between the endfaces of two endface-coupled waveguides. For example, it is desirable to have the refractive index of the pigtailing material be within about 0.03 of the refractive index of the core of the polymer waveguide. It is even more desirable to have the refractive index of the pigtailing material be within about 0.01 of the refractive index of the core of the polymer waveguide.

The inventors surmise that the improvement in return loss variability has to do with the qualities of the endfaces of the waveguides. It is possible to dice (or "cleave") most inorganic waveguides to yield an endface with a controlled geometry, for example, with a known and controllable angle. Endfaces of inorganic waveguides may be made relatively smooth by dicing or polishing. Conversely, the softness of most polymer materials makes dicing and polishing polymer waveguides very difficult. In general, it is nearly impossible to control the angle and smoothness of the endface of a polymer waveguide prepared by dicing. This problem is especially noticeable in low modulus materials such as highly fluorinated polymer waveguides, which tend to be much softer than their hydrogenated or chlorinated counterparts. The inventors surmise that by matching the refractive index of the pigtailing material to the refractive index of the polymer waveguide, the uncontrolled polymer waveguide endface/pigtailing material interface is optically hidden, and the effect of the variability of the polymer waveguide endface is minimized.

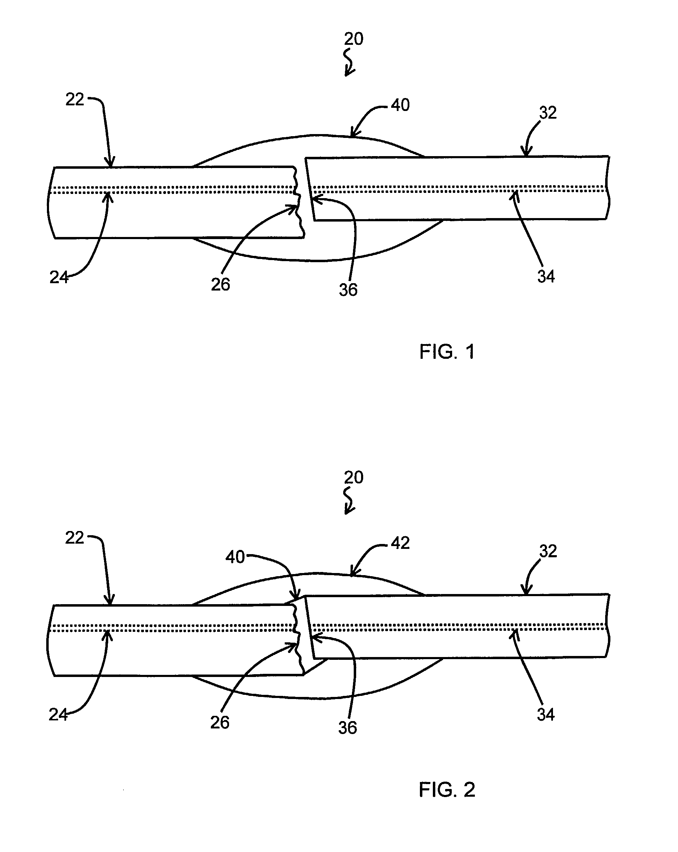

In one embodiment of the present invention, shown in FIG. 1, an optical device 20 includes a polymer waveguide 22. The polymer waveguide may be made from any material system known to the skilled artisan, including, for example, highly fluorinated materials, such as those described in U.S. Patent 6,306,563 and in commonly owned and copending U.S. Patent Application serial number 09/745,076; highly chlorinated materials, such as those described in commonly owned and copending U.S. Patent Application serial number 09/705,614; high index polymers, such as those described in commonly owned and copending U.S. Patent Application serial number 09/684,953 and in U.S. Patent 5,612,390; polyimides; polycarbonates; poly(trifluorovinyl ethers); polyesters; polyacrylates; polymethacrylates; polysulfones; and thiol-ene polymers. Depending on the material system, the polymer waveguide may be fabricated using standard techniques such as spin coating, reactive ion etching, photolithography, micromolding, embossing, and transfer printing.

Polymer waveguide 22 has a core 24 for the propagation of an optical signal. The polymer waveguide core 24 has a refractive index determined chiefly by the identity of the polymeric material from which the waveguide is made. The polymer waveguide core may have a refractive index of greater than about 1.57, or even greater than about 1.62 at 1550 nm. Alternatively, the polymer waveguide core may have a refractive index of less than about 1.40, or even less than about 1.35 at 1550 nm. For example, highly fluorinated polymer waveguide cores may have a refractive index of about 1.34 at 1550 nm. Highly aromatic thioether polymers may have a refractive index of about 1.75 at 1550 nm.

An endface 26 is formed in the polymer waveguide 22, with the core 24 being terminated at the endface 26. The endface may be prepared, for example, by dicing. In the present invention, the quality of the polymer endface is not critical. Typically, diced polymer waveguides tend to have rough endfaces. Further, the angle of the endface may not be precisely known, and may vary along the endface. For example, for a given optical design, it may be desired to form an endface with an 8° angle to the normal of the propagation axis of the polymer waveguide core. The endface resulting from dicing at an 8° angle, however, may vary uncontrollably by several degrees and include undesirable roughness, corrugation, or other surface features. In the Figures of the present application, uncontrolled waveguide endfaces are schematically depicted as a crooked line.

Optical device 20 also includes an inorganic waveguide 32. Inorganic waveguide 32 may be an optical fiber, as shown in FIG. 1. For example, inorganic waveguide 32 may be a conventional single mode optical fiber. Alternatively, inorganic waveguide 32 may be a planar waveguide. The inorganic waveguide includes a core 34, having a refractive index, for the propagation of an optical signal. An endface 36 is formed in the inorganic waveguide, with the core 34 being terminated at the endface. The endface may be prepared, for example at a 7.3° angle to the waveguide axis normal. Conventional inorganic doped silica waveguides have refractive indices of between about 1.44 and about 1.49 at 1550 nm.

In the present invention, the refractive index of the polymer waveguide core 24 need not be closely matched to the refractive index of the inorganic waveguide core 34. For example, the absolute value of the difference between the refractive index of the polymer waveguide core and the refractive index of the inorganic waveguide core may be greater than about 0.07, or even greater than about 0.10.

In optical device 20, the waveguide endfaces 26 and 36 are within about 50 µm of one another and are substantially optically coupled to one another. In the gap formed between the endfaces is a polymeric pigtailing material 40. As used herein, a pigtailing material is a material that fills the gap between coupled waveguide endfaces. The refractive index of the pigtailing material is closely matched to the refractive index of the polymer waveguide core 24. For example, the pigtailing material may have a refractive index within about 0.03 of the refractive index of the polymer waveguide core 24. Preferably, the pigtailing material has a refractive index within about 0.01 of the refractive index of the polymer waveguide core 24. The pigtailing material preferably has adhesive properties, and serves to hold the inorganic waveguide in place against the polymer waveguide. However, the pigtailing material situated in the gap may not have significant adhesive properties, in which case a separate adhesive 42 may be used to provide mechanical strength to the pigtailed device, as shown in FIG. 2. Ideally, the pigtailing material should be perfectly optically transparent. However, since the path length of an optical signal in the pigtailing material is very short, relatively high loss materials (e.g. 1-3 dB/cm (100-300 dB/m)) can be used.

The gap-filling pigtailing material should be formulated to have a refractive index closely matching the refractive index of the polymer waveguide core as well as properties compatible with the polymer waveguide. Preferably, the gap-filling pigtailing material further has adhesive properties. As the skilled artisan will appreciate, the monomers and polymers used to make the polymer waveguide will often be suitable for use in the gap-filling pigtailing material. For example, if an energy curable composition is used to fabricate the polymer waveguide, the same or a similar composition might be used to fill the gap between the waveguide endfaces. Alternatively, adhesion-enhancing additives, such as organosilane coupling agents, may be combined with the monomers and polymers used in the fabrication of the polymer waveguide.

It may be desirable to synthesize new monomers and polymers for use in the gap-filling pigtailing material. In designing these new monomers and polymers, it is advantageous to use molecular structural motifs found in the polymers used in the polymer waveguide. For example, as described in the Examples, below, if the polymers of the polymer waveguide are based on perfluorinated polyethers, it may be desirable to use a gap-filling pigtailing material based on perfluorinated polyethers. Alternatively, if an aromatic thiol-ene composition is used to fabricate the polymer waveguide, it may be desirable to use an aromatic thiol-ene composition as the basis of the pigtailing material. The monomers and polymers used in the pigtailing material may also be designed by the skilled artisan to impart greater adhesion or cohesion to the pigtailing material.

In another embodiment of the present invention, a method for constructing an optical device is provided. A polymer waveguide having a core and an endface, as described above, is provided. As described in connection with the device above, the polymer waveguide endface need not have a well-controlled geometry. An inorganic waveguide having a core and an endface, as described above, is provided. The polymer waveguide core may have a refractive index of greater than about 1.57, or even greater than about 1.62 at 1550 nm. Alternatively, the polymer waveguide core may have a refractive index of less than about 1.40, or even less than about 1.35 at 1550 nm. The absolute value of the difference between the refractive index of the polymer waveguide core and the refractive index of the inorganic waveguide core may be greater than about 0.07, or even greater than about 0.10.

The endface of the polymer waveguide is aligned with the endface of the inorganic waveguide with a gap of less than 50 µm between the two. The waveguide endfaces are aligned so that the core of the polymer waveguide is substantially optically coupled to the core of the inorganic waveguide. This alignment may be performed passively or actively, using methods familiar to the skilled artisan. For example, the alignment may be performed using a conventional pigtailing bench equipped with two 4-axis precision stages, a light source coupled to the inorganic waveguide, and a detector coupled the polymer waveguide. Using the 4-axis stages, the relative positions of the waveguides are optimized to maximize the signal detected by the detector, thereby optimizing the coupling between the waveguide endfaces.

The gap formed between the endfaces is filled with an energy curable composition. As described above, the energy curable composition is chosen to have, when cured, a refractive index closely matching that of the polymer waveguide core. The energy curable composition may be introduced into the gap using, for example, a syringe. The energy curable composition is cured using an appropriate source of energy to yield a pigtailing material. For example, actinic radiation, heat, or electron beam radiation may be used to cure the energy curable composition. Some energy curable compositions may cure at ambient temperature in a reasonable time. A variety of types of energy curable compositions may be used in the present invention. For example, acrylate, methacrylate, epoxy, and thiol-ene compositions may be used. The resulting pigtailing material has a refractive index within about 0.03 of the refractive index of the core of the polymer waveguide. Preferably, the resulting pigtailing material has a refractive index within about 0.01 of the refractive index of the core of the polymer waveguide.

In one embodiment of the present invention, the polymer waveguide is a highly fluorinated waveguide based on the perfluorinated polyether acrylates described in U.S. Patent 6,306,563 and in commonly owned and copending U.S. Patent Application serial number 09/745,076. The core of a perfluorinated polyether-based polymer waveguide has a refractive index of about 1.34 at 1550 nm. Such waveguides may be pigtailed in accordance with the present invention using a gap-filling pigtailing material with a refractive index in the range of about 1.31 to about 1.37 at 1550 nm.

One desirable monomer for use in formulating energy curable compositions for pigtailing has the structure:

E-OOC-NH-R-NH-COO-CH₂-Rf-CH₂-OOC-NH-R-NH-COO-E

wherein E is a polymerizable moiety, R is an aliphatic or aromatic linker moiety, and Rf is a perfluorinated polyether moiety. For example, E may be 2-acryloxyethyl, 2-methacryloxyethyl, glycidyl or 2,3-dimercapto-1-propyl. The linker moiety R may be, for example, a 1,5-isophoronyl moiety or a 2,4-tolylene moiety. Rf may be

-CF₂O-[(CF₂CF₂O)ₘ(CF₂O)ₙ]-CF₂-,

-CF(CF₃)O(CF₂)₄O[CF(CF₃)CF₂O]ₚCF(CF₃)-,

or

-CF₂O-(CF₂CF₂O)ₘ-CF₂-,

wherein m and n designate the number of randomly distributed perfluoroethyleneoxy and perfluoromethyleneoxy backbone repeating subunits, respectively, and p designates the number of -CF(CF₃)CF₂O- backbone repeating subunits. The use of these perfluorinated polyether urethane monomers is especially advantageous in that the N-H bonds of the urethane group impart adhesion and cohesion to the cured polymeric material through hydrogen bonding. These monomers may be made using techniques familiar to the skilled artisan, and described in the Examples, below. These perfluorinated polyether urethane materials may be used to formulate acrylate, epoxy, and thiol-ene based energy curable compositions.

In another embodiment of the present invention, the polymer waveguide is a high refractive index polymer waveguide based on the aromatic sulfur-containing polymers described in commonly owned and copending U.S. Patent Application serial number 09/684,953 and in U.S. Patent 5,612,390. The core of an aromatic sulfur-containing polymer waveguide may have a refractive index of about 1.66 at 1550 nm. Such waveguides may be pigtailed in accordance with the present invention using a gap-filling pigtailing material with a refractive index in the range of about 1.63 to about 1.69 at 1550 nm. For example, a small amount of the aromatic sulfur-containing energy curable composition used to make the polymer waveguide cladding may fill the gap between the inorganic waveguide endface and the polymer waveguide endface. The energy curable composition may be cured to yield the pigtailing material. The pigtail may then be given mechanical strength using a conventional adhesive, as described above in connection with FIG. 2.

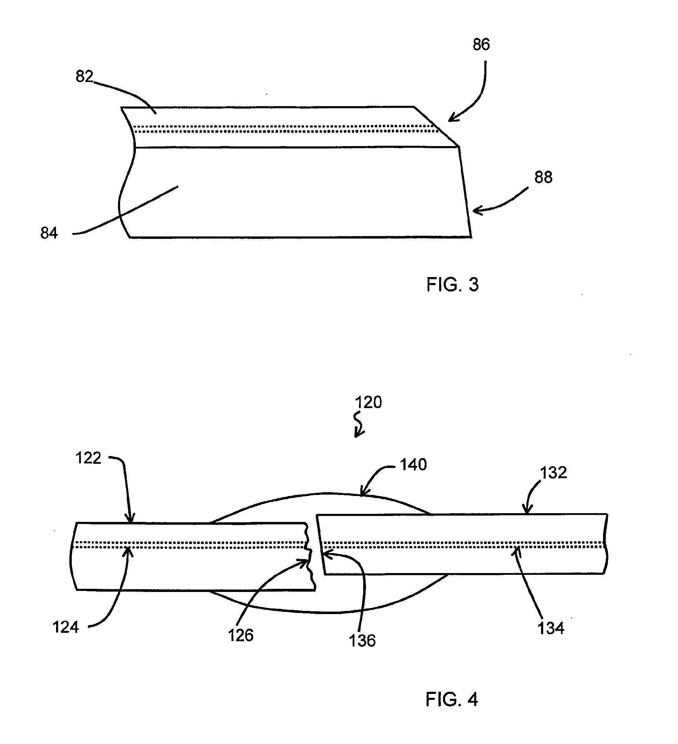

The invention described above with respect to the pigtailing of polymer waveguides may also be advantageously used for the pigtailing of other waveguides. In another aspect of the invention, a method for pigtailing a waveguide having an uncontrolled endface is provided. As used herein, an uncontrolled endface is an endface that is sufficiently rough to degrade an optical signal of a desired wavelength, or is not formed at an angle substantially matching the endface of the substrate upon which the waveguide is constructed. For example, an uncontrolled endface may be a substantially nonplanar endface having a surface roughness, surface corrugation, or other surface features large enough to degrade an optical signal of a desired wavelength. For example, for a device propagating an optical signal with a 1550 nm wavelength, a roughness, corrugation, or surface feature of larger than about 200 nm would significantly degrade the optical signal. An uncontrolled endface may also be substantially planar, but formed at an angle differing by more than about 2° from the angle of the endface of the substrate upon which the waveguide is formed. For example, FIG. 3 shows a waveguide 82 built on a substrate 84. The endface 86 of the waveguide 82 is formed at a substantially different angle than the endface 88 of the substrate 84. As described above, polymeric waveguide devices prepared by dicing tend to have uncontrolled endfaces. Waveguides made from brittle, highly stressed, or crystalline inorganic materials may also have uncontrolled endfaces upon dicing or polishing. The skilled artisan will apply the teachings described in connection with the pigtailing of polymer waveguides to the more general case of pigtailing waveguides with uncontrolled endfaces.

In one embodiment of the present invention, shown in FIG. 4, a pigtailed waveguide device is provided. Optical device 120 includes a first waveguide 122. First waveguide 122 includes a core 124 for the propagation of an optical signal. The refractive index of the first waveguide core 124 is determined chiefly by the identity of the material from which the first waveguide is constructed. The first waveguide core 124 may have a refractive index of greater than about 1.57, or even greater than about 1.62 at 1550 nm. Alternatively, the waveguide core 124 may have a refractive index of less than about 1.40, or even less than about 1.35 at 1550 nm. An endface 126 is formed in the first waveguide 122, with the core 124 being terminated at the endface 126. The endface may be prepared, for example, by dicing. The endface of the first waveguide is uncontrolled, as described above, and as shown in FIG. 4 by a rough line.

Optical device 120 also includes a second waveguide 132. Second waveguide 132 may be, for example, an optical fiber or a planar waveguide. The second waveguide includes a core 134, having a refractive index, for the propagation of an optical signal. An endface 136 is formed in the second waveguide, with the core 134 being terminated at the endface.

In optical device 120, the endfaces of the first waveguide core 124 and the second waveguide core 134 are substantially optically coupled to one another, and the waveguide endfaces 126 and 136 are within about 50 mm of one another. In the gap formed between the endfaces is a polymeric pigtailing material 40. The refractive index of the pigtailing material is closely matched to the refractive index of the first waveguide core 124. For example, the pigtailing material may have a refractive index within about 0.03 of the refractive index of the first waveguide core 124. Preferably, the pigtailing material has a refractive index within about 0.01 of the refractive index of the first waveguide core 124. The inventors surmise that the uncontrolled endface will be optically hidden by the index-matched adhesive, thereby reducing the device insertion loss and return loss due to the uncontrolled endface.

In another embodiment of the present invention, a method for constructing an optical device is provided. A first waveguide having a core and an uncontrolled endface, as described above, is provided. A second waveguide having a core and an endface, as described above, is provided. The first waveguide core may have a refractive index of greater than about 1.57, or even greater than about 1.62 at 1550 nm. Alternatively, the first waveguide core may have a refractive index of less than about 1.40, or even less than about 1.35 at 1550 nm. The absolute value of the difference between the refractive index of the first waveguide core and the refractive index of the second waveguide core may be greater than about 0.07, or even greater than about 0.10.

The endface of the first waveguide is aligned with the endface of the second waveguide with a gap of less than 50 µm between the two. The waveguide endfaces are aligned so that the endface of the first waveguide is substantially optically coupled to the endface of the second waveguide. This alignment may be performed passively or actively, using methods familiar to the skilled artisan. For example, the alignment may be performed using a conventional pigtailing bench equipped with two 4-axis precision stages, a light source coupled to the inorganic waveguide, and a detector coupled the polymer waveguide. Using the 4-axis stages, the relative positions of the waveguides are optimized to maximize the signal detected by the detector, thereby optimizing the coupling between the waveguide endfaces.

The gap formed between the endfaces is filled with an energy curable composition. As described above, the energy curable composition is chosen to have, when cured, a refractive index closely matching that of the first waveguide core. The energy curable composition may be introduced into the gap using, for example, a syringe. The energy curable composition is cured using an appropriate source of energy to yield a pigtailing material. For example, actinic radiation, heat, or electron beam radiation may be used to cure the energy curable composition. Some energy curable compositions may be cured by being exposed to ambient temperature for a specified amount of time. A variety of types of energy curable compositions may be used in the present invention. For example, acrylate, methacrylate, epoxy, and thiol-ene compositions may be used. The resulting pigtailing material has a refractive index within about 0.03 of the refractive index of the core of the first waveguide. Preferably, the resulting pigtailing material has a refractive index within about 0.01 of the refractive index of the core of the first waveguide.

### EXAMPLES

The following Examples serve to illustrate the invention, and are not intended to limit the invention.

In Example 1, a suitable process for the fabrication of the polymer waveguide is described. In Examples 2 and 3, syntheses of novel perfluorinated polyether-based monomers are described. In Example 4, the synthesis of a fluorinated photoinitiator is described. In Examples 5, 6 and 7, energy curable compositions suitable for pigtailing the polymer waveguide of Example 1 are described. In Example 8, the pigtailing of the polymer waveguide of Example 1 using the energy curable compositions of Examples 5, 6 and 7 is described. Example 9 provides an example of a high index polymer waveguide system.

UV-D10 has a molecular weight of about 1200 g/mol and has the structure:

CH₂=CHCO₂CH₂CF₂O-[(CF₂CF₂O)ₘ(CF₂O)ₙ]-CF₂CH₂O₂CCH=CH₂.

UV-T has a molecular weight of about 2400 g/mol and has the structure: 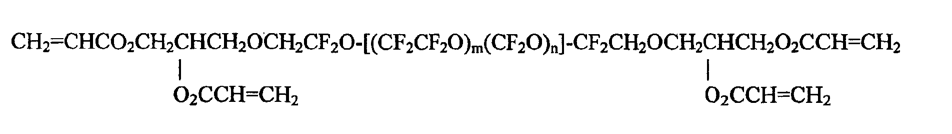 UV-8 has the structure: CH₂=CHCO₂-CH₂CF₂CF₂CF₂CF₂CH₂-O₂CCH=CH₂.

DAROCUR 1173 is 2-hydroxy-2-methyl-1-phenylpropan-1-one, and is available from E. Merck of Darmstadt, Germany. IRGACURE 2959 is 1-[4-(2-hydroxyethoxy)phenyl]-2-hydroxy-2-methylpropan-1-one, and is available from Ciba Additives of Basel, Switzerland. IRGACURE 907 is 2-methyl-1-[(4-methylthio)phenyl]-2-morpholinopropan-1-one, and is available from Ciba Additives of Basel, Switzerland. IRGACURE 184 is 1-hydroxycyclohexyl phenyl ketone, and is available from Ciba Additives of Basel, Switzerland.

The tetrafunctional polyol FLUOROLINK T is available from Ausimont USA, Inc., of Thorofare, NJ. FLUOROLINK T has a molecular weight of about 2200 g/mol, and has the structure:

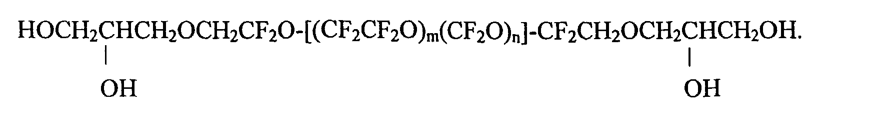

FPI is a fluorinated photoiniator described in U.S. Patent No. RE35,060. FPI has the structure:

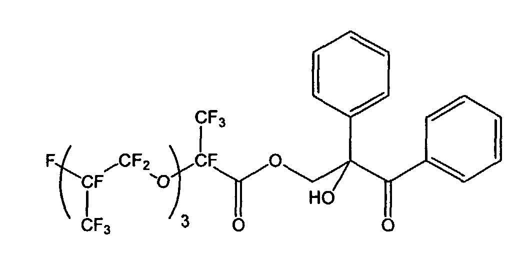

### Example 1

The process described herein was applied to the production of an array of planar polymer waveguides on a silicon wafer. This process was demonstrated to have advantages in ease of use and ease of scalability. Additionally, the process produced fabricated waveguides with high uniformity of such physical features as layer thickness and waveguide geometry, and with very low optical insertion loss at important telecommunication waveguides of roughly 1.3 µm and 1.55 µm.

A 100-mm diameter 4" silicon wafer with a 500 nm thick oxide layer was obtained in a clean state from the wafer manufacturer. The silicon substrate was treated by soaking in 4 M NaOH solution for 1 hour, followed by rinsing under flowing de-ionized water for 15 minutes. The NaOH treatment is meant to ensure complete functionalization of the silicon oxide surface with OH groups. The silicon wafer was dried by blowing off excess water and baking on a 120°C hot plate for 10 minutes. Neat (3-acryloxypropyl)trichlorosilane was soaked onto a swab and then coated entirely over onto the surface of the wafer. Immediately after swabbing, a cleanroom cloth soaked with ethanol was gently rubbed over the surface to remove any large particles resulting from the fast hydrolysis reaction of the trichlorosilane material. The wafer was then flooded with ethanol and spun at 1000 rpm for 30 seconds. After inspection to ensure that no large particles remained, the wafer was annealed at 120°C for 3 minutes to assure complete cure of the (3-acryloxypropyl)trichlorosilane and to remove any residual ethanol.

Three different photopolymerizable material compositions were mixed in advance, filtered, and allowed to settle overnight to allow bubbles from filtration to dissipate. The core mixture was 92 parts by weight UV-T, 8 parts by weight UV-8, and 1 part by weight DAROCUR 1173. The cladding mixture was 100 parts by weight UV-T and 1 part by weight DAROCUR 1173. The buffer mixture was 75 parts by weight UV-T, 25 parts by weight UV-D10, and 2 parts by weight FPI. These mixtures produce system components consisting of matched core and cladding with refractive indices of 1.336 and 1.329, respectively, and a buffer with a refractive index of 1.313. All mixtures were pre-filtered to eliminate particles above 0.1 micron. The materials chosen were 100% solids and had viscosities of 100 to 500 cP which allowed them to be spin coated, neat, onto silicon wafers.

The wafer was then centered on the chuck of a spin coating apparatus. A volume of 0.7 mL of a buffer material was dispensed on the wafer. The puddle of monomer was spread at low rotational speed, 300 rpm, and then accelerated to 1300 rpm for 18 seconds to create a wet film that was measured to be 10 µm thick. At the end of the spin cycle, an edge bead removal cycle was carried out. Here, acetone was dispensed through a capillary tube above the edge of the spinning wafer so as to dispense onto the outer 1 cm of the wafer. The material in this region was thus removed. Finally, a back-side rinse step with acetone was carried out to clean any residual material from the backside of the wafer. The thickness was verified using non-contact, interferometric thin film measurements. The wafer was then transferred to a vacuum-purge chamber. A leak-free chamber with an internal volume of 3 liters was used. The chamber was constructed of aluminum walls, VITON O-rings, and quartz window and allowed for both evacuation of air and nitrogen purging. Clamps on the box lid and a check valve were used to ensure that a positive pressure of nitrogen could be established during purging. This also ensured that no air could leak in during the purge cycle. Likewise, air could easily be eliminated in the vacuum cycle by ensuring that the chamber was leak free. Typically, the chamber could be evacuated to 0.2 Torr or less with a standard rotary vein mechanical pump. For process consistency, a standard purge cycle was established. Vacuum was applied for 30 seconds until a level of 5 Torr was reached. This was followed by 1.5 minutes of nitrogen purging at 10 L/min. The sample was then illuminated under a collimated UV light source. Additionally, for blanket exposure steps, a 5 degree diffuser plate was used to prevent the imaging of spurious optical reflections from the UV light source and also to prevent self-focusing of the collimated radiation within the photopolymerizable material. A dose of 317 mJ/cm² was applied to the buffer. The buffer thickness was confirmed at 10 µm. Next, an underclad layer was applied. This layer was applied in a manner similar to that described for the buffer layer above, with a higher rotational speed being chosen for the spin step so as to provide the required thinner film thickness. This underclad layer was measured at around 2 µm thick when wet. The sample was again placed in the vacuum-purge chamber. Vacuum was applied for 30 seconds until a level of 5 Torr was reached. This was followed by 1.5 minutes of nitrogen purging at 10 L/min. Using the 5 degree diffuser, a dose of 28 mJ/cm² for was applied to the underclad. The sample was again returned to the spin coater, and a 6 µm thick layer of core material was applied via the method described above. After coating and edge-bead removal, the wafer was placed on a wafer-photomask aligning jig. The jig contained an integrated wafer vacuum chuck. The vacuum chuck was designed to hold the wafer flat and in a specific orientation with respect to the wafer flat. Wires were then placed on the wafer to act as a spacer. With a total film thickness, including buffer, clad, and core, of 18 µm, the wire was placed on the silicon wafer in the area of the edge bead removal. Thus a 25 µm wire provided a proximity spacing of approximately 7 µm. Alternatively, a 35 µm wire provided a proximity spacing of 17µm. A wedge-shaped spacer, ½" high, was then place next to the wafer. A 6"x6" photomask was then placed, with the high resolution chrome image face down above the wafer and its alignment was ensured by the wafer-photomask alignment jig. One edge of the mask was held up by the wedge shaped spacer. The mask was held away from the wafer to minimize the potential that contact of the photopolymerizable material to the mask could occur during the purge cycle. The core layer was purged with more mild vacuum and purge cycles. Vacuum was applied for 1 sec at a time, reducing the vacuum to 300 Torr. The chamber was then purged back to atmospheric pressure with nitrogen. This vacuum-purge cycle was repeated 6 times, once every 20 seconds, until 100 seconds had elapsed. Finally, nitrogen purge was continued for an additional 320 seconds. The more gentle vacuum cycle prevents evaporating monomers from contaminating the photomask. After the purging was complete, the mask was lowered by moving the wedge using a vacuum-sealed linear motion feed through. The mask thus rested on the wire spacers and did not contact the wafer nor the wet photopolymerizable material layers directly. Using a collimated UV light source, a dose of 17 mJ/cm² was applied. The wafer was then moved back to the spin coater, where an appropriate solvent was used to spin-develop regions of the wet core layer which had not been exposed. A fluorinated solvent, GALDEN HT-110 sold by Ausimont, was used for this purpose. After development, the core ribs were analyzed using a microscope and height profiling instrument. For a rib with nominal dimensions of 6 x 6 µm, the height and width were both held within a maximum deviation of 0.2 µm across the wafer. Since the mask did not contact the liquid core material, the thickness uniformity of the core was excellent. Since the wafer chuck and mask were both very flat and free of bow or warp, the width uniformity attained through the proximity exposure process was also excellent. Next, overclad material was spun on using the techniques described above. In this case, edge bead removal was optional. Since the resist did not dry during spinning, the overclad material flowed over the core ribs and planarized the surface above the core ribs quite well. The residual bump of the core rib under the overclad was about 0.5 µm tall. The sample was again placed in the vacuum-purge chamber. Vacuum was applied for 30 seconds until a level of 5 Torr was reached. This step was followed by 1.5 minutes of nitrogen purging at 10 L/min. Using the 5 degree diffuser, a dose of 4400 mJ/cm² for was applied to the overclad and the underlying material layers. The sample was then placed in a 100 °C oven for three hours to drive out volatile components.

### Example 2

A suitable perfluoropolyether diisocyanate, poly(tetrafluoroethylene oxide-*co*-difluoromethylene oxide) α,ω-diisocyanate, with a molecular weight of about 3000 g/mol and the structure: 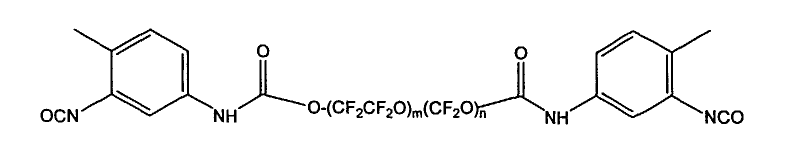 was purchased from Sigma-Aldrich, Milwaukee, WI.

This diisocyanate (3.0 g) was heated at reflux for two hours with 2.2 equivalents (0.255 g) of hydroxyethyl acrylate and 50 mg dibutyltin dilaurate in about 10 mL ethyl nonafluorobutyl ether. The reaction was followed by monitoring the disappearance of the isocyanate stretching band and the growth of the carbonyl band by FTIR. Upon completion of the reaction, the mixture was washed well with water and concentrated by rotary evaporation to yield a very viscous oil having the idealized structure: 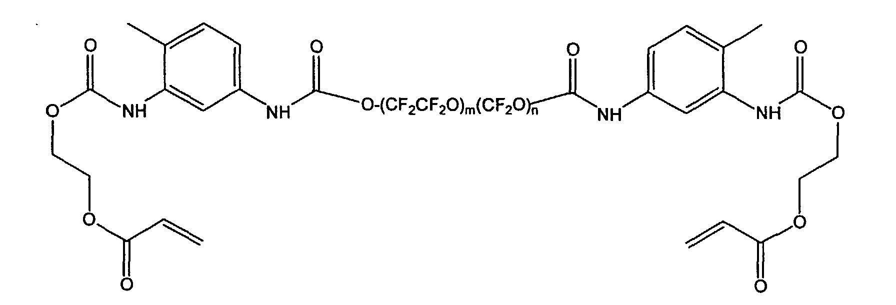 This macromonomer has been given the acronym PFEDA.

### Example 3

The perfluoropolyether diisocyanate described in Example 2 was heated at reflux for four hours with 2.2 equivalents (0.272 g) of 2,3-dimercapto-1-propanol in about 15 mL 1:1 ethyl perfluorobutyl ether/dimethylformamide with 50 mg dibutyltin dilaurate. The reaction was followed by monitoring the disappearance of the isocyanate stretching band and the growth of the carbonyl band by FTIR. Upon completion of the reaction mixture was washed well with water and concentrated by rotary evaporation to yield a very viscous oil having the idealized structure: 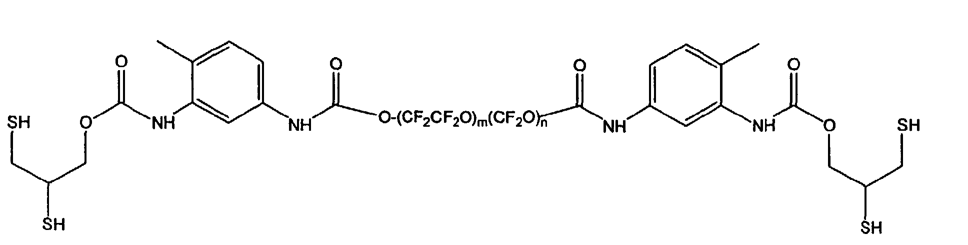 This macromonomer has been given the acronym PFETMP.

### Example 4

One equivalent of IRGACURE 2959 and one equivalent of heptafluorobutyric anhydride were dissolved in THF and heated at reflux in the dark for 16 hours. The reaction mixture was poured into water, and extracted with ethyl nonafluorobutyl ether. The solvent was evaporated under vacuum to yield a fluorinated photoinitiator with the structure: 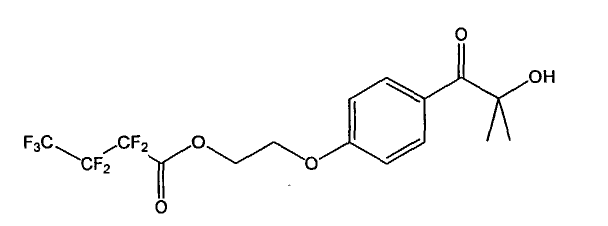 This fluorinated photoinitiator has been given the acronym FBPI.

### Example 5

An energy curable composition was formulated by combining 89 parts by weight FPEDA, 10 parts by weight heptadecafluorodecyl acrylate, 0.6 parts by weight FBPI, 0.2 parts by weight IRGACURE 907, and 0.2 parts by weight IRGACURE 184. This formulation is known herein as AD5. The AD5 formulation was carefully outgassed under vacuum and loaded into a syringe in a nitrogen-filled glovebox. The AD5 formulation is oxygen sensitive, and is best used within two hours of formulation. The AD5 formulation may be cured using UV radiation to yield a polymeric material with a refractive index of about 1.36 at 1550 nm.

### Example 6

An energy curable composition was formulated by combining 84 parts by weight FPEDA, 10 parts by weight UV-8, 5 parts by weight heptadecafluorodecyl acrylate, 0.6 parts by weight FBPI, 0.2 parts by weight IRGACURE 907, and 0.2 parts by weight IRGACURE 184. This formulation is known herein as AD6. The AD6 formulation was carefully outgassed under vacuum and loaded into a syringe in a nitrogen-filled glovebox. The AD6 formulation is oxygen sensitive, and is best used within two hours of formulation. The AD6 formulation may be cured using UV radiation to yield a polymeric material with a refractive index of about 1.36 at 1550 nm.

### Example 7

A three-neck flask was equipped with a Dean-Stark condenser and a magnetic stirrer. To the flask was added FLUOROLINK T (82 g) and 3-mercaptopropionic acid. To the mixture was added one drop of polyphosphoric acid and 100 mL of toluene. The flask was heated at reflux with the water formed in the esterification reaction being collected in the Dean-Stark condenser. After two days, the mixture was cooled to room temperature and triethylamine (1 mL) was added to neutralize any unreacted acid. The mixture was washed three times with a mixture of 90 g of methanol and 10 g of water. Residual solvent was removed by rotary evaporation. The relatively high absorbance (0.085 cm⁻¹ at 1550 nm) of this material was attributed to incomplete esterification; infrared spectroscopy confirmed the presence of residual hydroxyl groups. This material has been named T-SH and can be described as having the structure: 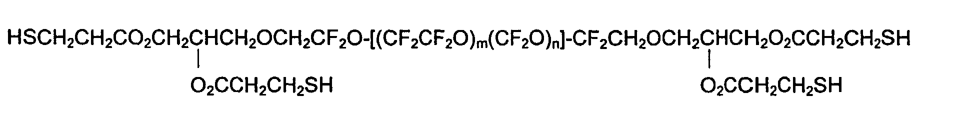 where the ratio of m:n varies from about 0.5:1 to 1.4:1, m varies from about 6.45 to about 18.34 on average, and n varies from about 5.94 to about 13.93 on average. Desirable materials have a ratio of m:n of about 1, an average m and an average n of about 10.3.

An energy curable composition was formulated by combining 1.0 g UV-T, 0.8 g T-SH, 0.15 g PFETMP, 0.05 g FBPI, 0.03 g (3-acryloxypropyl)trimethoxysilane, and 0.03 g (3-glycidyloxypropyl)trimethoxysilane. This formulation is known herein as AD7. The AD7 formulation was carefully outgassed under vacuum and loaded into a syringe in a nitrogen-filled glovebox. The AD7 formulation has a shelf life of at least about three weeks. The AD7 formulation may be cured using UV radiation to yield a polymeric material with a refractive index of about 1.34 at 1550 nm.

### Example 8

The polymer waveguide described in Example 1 was diced to provide an endface with four waveguide cores exposed. The dicing was at an 8° to the vertical, as shown in FIG. 2. A fiber block based on a silicon V-groove substrate was loaded with four optical fibers (SMF 28 available from Corning Incorporated and having a core refractive index of 1.465 at 1550 nm) and diced at an 8° angle to the vertical, as shown in FIG. 4. The fiber block was aligned to the waveguide cores using an active alignment process on conventional pigtailing bench equipped with two 4-axis precision stages, a light source coupled to the inorganic waveguide, and a detector coupled the polymer waveguide. Using the 4-axis stages, the relative positions of the waveguides were optimized to maximize the signal detected by the detector. This process left a gap of less than about 10 µm between the endfaces of the fibers and of the polymer waveguides. The gap was filled with one of the energy curable compositions (AD5, AD6 or AD7), and the energy curable composition was cured with UV radiation from the top and the bottom of the device using a high pressure mercury lamp (∼10 W/cm2) for two minutes. The devices were post-baked at 65 °C for 12 hours.

Return losses for devices pigtailed using AD5 were -48±5 dB. Return losses for devices pigtailed using AD6 were -48±3 dB. Return losses for devices pigtailed using AD7 were -52±3 dB. As a comparision, return losses for devices pigtailed using adhesives with refractive indices of about 1.50 at 1550 nm were -43±7 dB and -46±7 dB.

### Example 9

An aromatic sulfur-containing oligomer may be prepared by heating 4,4'-thiobisbenzenethiol (3.762 g) and 1,3-diisopropyenylbenzene (2.142 g) in mesitylene (3.316 g) at 85 °C until reaction of the isopropenyl double bonds is complete as determined by infrared spectroscopy. Ethylene glycol dimethacrylate(0.606 g) is added, and the mixture is heated at 60 °C until reaction of the thiol is complete as determined by infrared spectroscopy. p-Methoxyphenol (0.008 g), thiodiethylenebis(3,5-di-*tert*-butyl-4-hydroxy)hydrocinnamate, available from Ciba as IRGANOX 1035 (0.146 g), (3-aminopropyl)trimethoxysilane (0.003 g), and GENORAD 16, a polymerization inhibitor in acrylic acid ester available from Rahn USA (0.017 g) are added. The oligomer has the putative structure

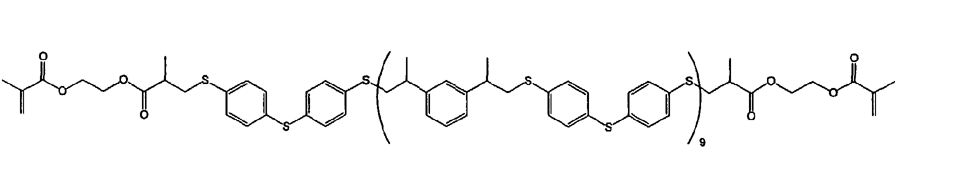

An energy curable composition suitable for making a high index waveguide core may be made by mixing the above oligomer solution (6.15 g) with bis(4-methacryloylthiophenyl)sulfide (3.516 g) and IRGACURE 1850 (50 wt% 1-benzoyl-1-hydroxycyclohexane + 50 wt% bis(2,5-dimethoxybenzoyl)(2,4,4-trimethylpentyl)phosphine oxide), available from Ciba Additives of Basel, Switzerland (0.22 g). An energy curable composition suitable for making a high index waveguide cladding may be made by mixing the above oligomer solution (5.67 g) with bis(4-methacryloylthiophenyl)sulfide (3.70 g), ethoxylated bisphenol A diacrylate, available from Sartomer as SR-349 (0.40 g), and IRGACURE 1850 (50 wt% 1-benzoyl-1-hydroxycyclohexane + 50 wt% bis(2,5-dimethoxybenzoyl)(2,4,4-trimethylpentyl)phosphine oxide), available from Ciba Additives of Basel, Switzerland (0.24 g).

Polymer waveguide fabrication procedures familiar to the skilled artisan may be used make high index waveguides using these compositions. For example, the compositions of this Example may be used in a UV embossing microreplication process in which liquid compositions are applied to a transparent substrate, patterned with a tool, and cured. The tool may be on a cylindrical drum, which is rolled across the liquid composition while UV radiation is exposed to the area of the composition in contact with the tool. The tool is rolled away from the cured polymer, leaving the waveguide pattern in the cured polymer composition. The waveguide may be overclad with the cladding composition by spin coating followed by curing. The core of this waveguide has a refractive index of about 1.652 at 1550 nm.

The high index polymer waveguide thus constructed may be diced, and pigtailed to an optical fiber using a pigtailing material with a refractive index in the range of about 1.62 to about 1.68 at 1550 nm. In this example, the materials of the waveguide itself have good adhesion and are amenable to a pigtailing process. Thus, the waveguide may be pigtailed using the cladding energy curable composition detailed above to form the pigtailing material.

It will be apparent to those skilled in the art that various modifications and variations can be made to the present invention without departing from the scope of the invention. Thus, it is intended that the present invention cover the modifications and variations of this invention provided they come within the scope of the appended claims and their equivalents.

Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.

## Claims

1. An optical device for use with an optical signal propagating therein, the optical device comprising:
a first waveguide having a core and an endface, the core of the first waveguide having a refractive index, the core being terminated at the endface, and either
(a) the endface of the waveguide being uncontrolled (for instance not being smooth, not being optically flat, and/or not being at an angle optimised to avoid deleterious back-reflection) or
(b) the said first waveguide being a polymer waveguide or
(c) both of those;
a second waveguide having a core and an endface, the core of the second waveguide having a refractive index, the core of the second waveguide being terminated at the endface, the endface of the first waveguide being within about 50 µm of the endface of the second waveguide, the core of the first waveguide being substantially optically coupled to the core of the second waveguide; and
a pigtailing material situated in the gap between the first waveguide and the second waveguide, the pigtailing material having a refractive index within about 0.03 of the refractive index of the core of the first waveguide.

2. An optical device for use with an optical signal propagating therein, the optical device comprising:
a polymer waveguide having a core and an endface, the core having a refractive index, the core being terminated at the endface;
an inorganic waveguide having a core and an endface, the core of the inorganic waveguide having a refractive index, the core of the inorganic waveguide being terminated at the endface, the endface of the polymer waveguide being within about 50 µm of the endface of the inorganic waveguide, the core of the polymer waveguide being substantially optically coupled to the core of the inorganic waveguide; and
a pigtailing material situated in the gap between the polymer waveguide and the inorganic waveguide, the pigtailing material having a refractive index within about 0.03 of the refractive index of the core of polymer waveguide,
in which the refractive index of the core of the polymer waveguide is less than about 1.4, or greater than about 1.57 at 1550 nm.

3. The optical device of claim 2 wherein the refractive index of the core of the polymer waveguide is less than about 1.35, or greater than about 1.62 at 1550 nm.

4. The optical device of claim 2 or claim 3 wherein the refractive index of the pigtailing material is within about 0.01 of the refractive index of the core of the polymer waveguide.

5. The optical device of any one of claims 2-4 wherein the return loss of an optical signal propagating in the optical device is more negative than about -40 dB.

6. The optical device of any one of claims 2-5 wherein the polymer waveguide comprises a polymer having a perfluoropolyether backbone, and wherein the energy curable composition includes a monomer with a perfluoropolyether backbone.

7. The optical device of claim 6 wherein the perfluoropolyether backbone is linked to the rest of the pigtailing material by urethane moieties.

8. The optical device of claim 7 wherein the energy curable composition includes a monomer of the structure:
E-OOC-NH-R-NH-COO-CH₂-Rf-CH₂-OOC-NH-R-NH-COO-E
wherein E is a polymerizable moiety, R is an aliphatic or aromatic linker moiety, and Rf is a perfluorinated polyether moiety.

9. A method for constructing an optical device comprising the steps of:
providing a polymer waveguide having a core and an endface, the core having a refractive index, the core being terminated at the endface, the core of the polymer waveguide having a refractive index of less than about 1.40 or greater than about 1.57 at 1550 nm;
providing an inorganic waveguide having a core and an endface, the core of the inorganic waveguide having a refractive index,
aligning the endface of the polymer waveguide with the endface of the inorganic waveguide with a gap of less than 50 µm therebetween, the core of the polymer waveguide being substantially optically coupled to the core of the inorganic waveguide;
filling the gap with an energy curable composition; and
curing the energy curable composition to yield a pigtailing material with a refractive index within about 0.03 of the refractive index of the core of the polymer waveguide.

10. The method of claim 9 wherein the core of the polymer waveguide has a refractive index of less than about 1.35, or greater than about 1.62 at 1550 nm.

11. The method of any one of claims 9-10 wherein the refractive index of the polymeric material is within about 0.01 of the refractive index of the core of the polymer waveguide.

12. The method of any one of claims 9-11 wherein the core of the inorganic waveguide has a refractive index of greater than about 1.44 at 1550 nm, and wherein the core of the polymer waveguide has a refractive index of less than about 1.37 at 1550 nm.

13. The method of any one of claims 9-12 wherein the polymer waveguide comprises a polymer having a perfluoropolyether backbone, and wherein the energy curable composition includes a monomer with a perfluoropolyether backbone.

14. An optical device for use with an optical signal propagating therein, the optical device comprising:
a first waveguide having a core and an endface, the core of the first waveguide having a refractive index, the core being terminated at the endface, the endface of the waveguide being uncontrolled;
a second waveguide having a core and an endface, the core of the second waveguide having a refractive index, the core of the second waveguide being terminated at the endface, the endface of the first waveguide being within about 50 µm of the endface of the second waveguide, the core of the first waveguide being substantially optically coupled to the core of the second waveguide; and
a pigtailing material situated in the gap between the first waveguide and the second waveguide, the pigtailing material having a refractive index within about 0.03 of the refractive index of the core of the first waveguide.

15. The optical device of claim 14 wherein the refractive index of the core of the first waveguide is less than about 1.4, or greater than about 1.57 at 1550 nm.

16. The optical device of claim 14 or claim 15 wherein the refractive index of the core of the first waveguide is less than about 1.35, or greater than about 1.62 at 1550 nm.

17. The optical device of any one of claims 14-16 wherein the pigtailing material has a refractive index within about 0.01 of the refractive index of the core of the first waveguide.

18. The optical device of any one of claims 14-17 wherein the uncontrolled endface has a roughness, corrugation, or surface feature of larger than about 200 nm.

19. The optical device of any one of claims 14-18 wherein the first waveguide is formed on a substrate, the substrate having an endface, the endface being formed at an angle; and wherein the uncontrolled endface is formed at an angle differing by at least about 2° from the angle of the endface of the substrate.

20. The optical device of claim 2 wherein the inorganic waveguide is optical fiber.

21. The optical device of claim 2 wherein the inorganic waveguide is a planar waveguide.

22. The optical device of claim 2 wherein the pigtailing material is formed by the polymerization of an energy curable composition.

23. The optical device of claim 2 wherein the return loss of an optical signal propagating in the optical device is more negative than about -50 dB.

24. An optical device for use with an optical signal propagating therein, the optical device comprising:
a polymer waveguide having a core and an endface, the core having a refractive index, the core being terminated at the endface;
an inorganic waveguide having a core and an endface, the core of the inorganic waveguide having a refractive index, the core of the inorganic waveguide being terminated at the endface, the endface of the polymer waveguide being within about 50 µm of the endface of the inorganic waveguide, the core of the polymer waveguide being substantially optically coupled to the core of the inorganic waveguide; and
a polymeric material situated in the gap between the polymer waveguide and the inorganic waveguide, the polymeric material having a refractive index within about 0.03 of the refractive index of the core of polymer waveguide,
in which the refractive index of the core of the polymer waveguide is less than about 1.40 at 1550 nm.

25. The optical device of claim 24 wherein the refractive index of the core of the polymer waveguide is less than about 1.35 at 1550 nm.

26. The optical device of claim 24 wherein the refractive index of the pigtailing material is within about 0.01 of the refractive index of the core of the polymer waveguide.

27. The optical device of claim 24 wherein the inorganic waveguide is an optical fiber.

28. The optical device of claim 24 wherein the inorganic waveguide is a planar waveguide.

29. The optical device of claim 26 wherein the pigtailing material is formed by the polymerization of an energy curable composition.

30. The optical device of claim 25 wherein the return loss of an optical signal propagating in the optical device is more negative than about -40 dB.

31. The optical device of claim 24 wherein the return loss of an optical signal propagating in the optical device is more negative than about -50 dB.

32. The optical device of claim 24 wherein the core of the inorganic waveguide has a refractive index of greater than about 1.44 at 1550 nm, and wherein the core of the polymer waveguide has a refractive index of less than about 1.37 at 1550 nm.

33. The method of claim 12 wherein the perfluoropolyether backbone is linked to the rest of the pigtailing material by urethane moieties.

34. The method of claim 33 wherein the energy curable composition includes a monomer of the structure:
E-OOC-NH-R-NH-COO-CH₂-Rf-CH₂-OOC-NH-R-NH-COO-E
wherein E is a polymerizable moiety, R is an aliphatic or aromatic linker moiety, and Rf is a perfluorinated polyether moiety.
